# EUROPÄISCHE PATENTSCHRIFT

(11) **EP 2 083 507 B1**
(45) Veröffentlichungstag und Bekanntmachung des Hinweises auf die Patenterteilung: **23.05.2018**
(21) Anmeldenummer: 09155064.0
(22) Anmeldetag: 13.08.2004
(51) Int. Cl.: H02K 7/04, H02K 29/10, H02K 1/24, H02K 15/16, H02K 19/10

(54) **Reluktanzmotor**
Reluctance motor
Moteur à reluctance

(30) Priorität: 18.08.2003 DE 10337939
(43) Veröffentlichungstag der Anmeldung: 29.07.2009
(62) Teilanmeldung aus: 04766491.7
(73) Patentinhaber: Vorwerk & Co. Interholding GmbH, 42275 Wuppertal (DE)
(72) Erfinder: Caldewey, Uwe, 44229 Dortmund (DE); Lienenlüke, Paul, 45549 Sprockhövel (DE); Theuermann, Volker, 58455 Witten (DE)
(74) Vertreter: Müller, Enno

(56) Entgegenhaltungen:
- EP-A1- 0 517 105
- EP-A1- 0 732 438
- DE-A1- 10 035 540

## Beschreibung

Reluktanzmotoren der in Rede stehenden Art sind bekannt. So wird bspw. auf die DE 100 35 540 A1 verwiesen. Der hieraus bekannte Reluktanzmotor ist mit einer Geberscheibe versehen, die mit im Grundriss kreisabschnittförmig verlaufenden Geberausformungen ausgestattet ist.

Aus der EP 0 732 438 A1 ist ein Elektromotor mit einem Radiallüfter bekannt, wobei an dem Radiallüfter quer zur Rotationsebene vorstehende Abschnitte in regelmäßiger Abfolge, die zur Geschwindigkeitsmessung dienen, ausgebildet sind. Aus der EP 0 517105 A1 ist die Kopftrommel eines Rekorders bekannt. Zur Ausbildung von Markierungen in Form von mehr oder weniger breiten Streifen sind vertikale Stege vorgesehen, zwischen denen Durchbrechungen ausgebildet sind.
Ausgehend von dem zunächst genannten Stand der Technik beschäftigt sich die Erfindung mit der Aufgabe, einen Reluktanzmotor mit einer vorteilhaft gebildeten Geberscheibe anzugeben.
Diese Aufgabe ist beim Gegenstand des Anspruches 1 gelöst, wobei darauf abgestellt ist, dass eine Geberausformung einen im Grundriss linear verlaufend ausgebildeten Verwirbelungsabschnitt ausformt, wobei eine Geberausformung sekantenartig dem Rand des Scheibengrundkörpers zugeordnet ist. Zufolge eines solchen Verwirbelungsabschnittes ergibt sich eine Lüfterwirkung, welche bspw. zur Reinigung der vorgesehenen und zu durchfahrenden Gabellichtschranken dient. Behinderungen und Anschmutzungen der Gabellichtschranken werden zufolge dessen insbesondere bei hohen Drehzahlen unterbunden. Aufgrund der erzeugten Luftturbulenzen stellt sich sogar eine automatische Reinigung der Lichtschranken ein. Die im Grundriss linear verlaufende Geberausformung ist sekantenförmig an dem scheibenförmigen Grundriss der Geberscheibe anschließend vorgesehen. Auch fertigungstechnisch ist eine Vereinfachung erzielt. Die Geberausformungen können durch Stanzen und anschließendes Hochkanten geformt werden. Die gradlinig linear verlaufenden Geberausformungen erzeugen die bereits genannte Lüfterwirkung.
Jedem Rotorsegment kann eine Geberausformung zugeordnet sein, wobei jedoch jedenfalls eine Axialflanke einer Geberausformung bezüglich einer Flachseite des zugeordneten Rotorsegmentes einen Umfangsversatz von 7,5° aufweist. Zufolge dieser Ausgestaltung ist der Betrieb bei vierphasigen Reluktanzmotoren sowohl bei Rechts- als auch bei Linkslauf desselben gewährleistet. Darüber hinaus ist erfindungsgemäß die Geberscheibe symmetrisch ausgestaltet, so dass die Breite einer Geberausformung der Spaltbreite zwischen zwei Geberausformungen entspricht. Demzufolge ergeben sich symmetrische Gebersignale, wobei bevorzugt pro Umdrehung bei zwei vorgesehenen, zu durchfahrenden Gabellichtschranken 24 Impulse erzeugt werden. Hieraus resultieren bei einem 8/6-Reluktanzmotor, d. h. einem Reluktanzmotor mit einem sechs Rotorsegmente aufweisenden Rotor und einem acht Spulen aufweisenden Stator vier eindeutige Positionsinformationen zur Ansteuerung der vier Phasen des Stators. So ist weiter vorgesehen, dass ein Rotorsegment sich über einen Umfangswinkel von 30° erstreckt.
Zur Vereinfachung des Auswuchtens des Rotors kann vorgesehen sein, dass selektiv auf einer oder mehreren Schmalseiten der Rotorsegmente zum Wuchten des Rotors Material entfernt ist, gegebenenfalls in unterschiedlichem Ausmaß. Hierdurch ist ein Wuchten auf einem relativ großen Außendurchmesser erreicht, wobei nur eine geringe Materialentnahme erforderlich ist. Je nach Gegebenheit können auf einer Flachseite eines Rotorsegments auch mehrere, gegebenenfalls unterschiedlich große Ausnehmungen vorgesehen werden. Als besonders vorteilhaft erweist sich diesbezüglich, dass eine Materialentfernung durch Ausfräsung erreicht ist.

Weiter wird auch vorgeschlagen, dass der Rotor aus einer Vielzahl von dünnen Blechen, die axial übereinander angeordnet sind, zusammengesetzt ist. So können gestanzte Bleche zum Einsatz kommen, welche axial übereinander angeordnet eine variable Rotorhöhe erlauben. Durch Anordnung von mehr oder weniger Rotorbleche ist das Rotorpaket in Rotorachsrichtung variabel gestaltbar, was insbesondere die Herstellung des Rotors erleichtert. Um das durch die Bleche geschaffene Rotorpaket zu festigen, ist vorgesehen, dass die Bleche miteinander verklebt sind. Bevorzugt wird diesbezüglich, dass die Verklebung aufgrund einer Backlackbeschichtung der Bleche erreicht ist. Durch den Einsatz derartiger Backlackbleche und entsprechender thermischer Behandlung ist eine weitere Verbesserung der Stabilität des Rotors erreicht. Unter Backlackblechen versteht man Bleche, welche gegebenenfalls zusätzlich zu einer beidseitigen Isolierschicht noch eine Backlackschicht aufweist. Diese Backlackschicht geht bei Temperaturerhöhung (Backen) in einen Klebezustand über. Durch diese Verklebung wird eine Verbindung der Einzelrotorbleche zu einem Gesamtrotorpaket erreicht, was sich hinsichtlich der Auswuchtung und der Stabilität als vorteilhaft erweist. Auch ein Verdrehen der Einzelbleche zueinander wird durch die Verklebung verhindert.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Reluktanzmotor in einer perspektivischen Zusammenbaudarstellung;
- Fig. 2: den Reluktanzmotor in einer perspektivischen Explosionsdarstellung;
- Fig. 3: den Rotor mit einer drehfest angeordneten Geberscheibe und einem gleichfalls drehfest angeordneten Lüfter in perspektivischer Einzeldarstellung;
- Fig. 4: den vergrößerten Schnitt gemäß der Linie IV-IV in Fig. 3;
- Fig. 5: die Draufsicht auf den Rotor mit Blick auf die Geberscheibe;

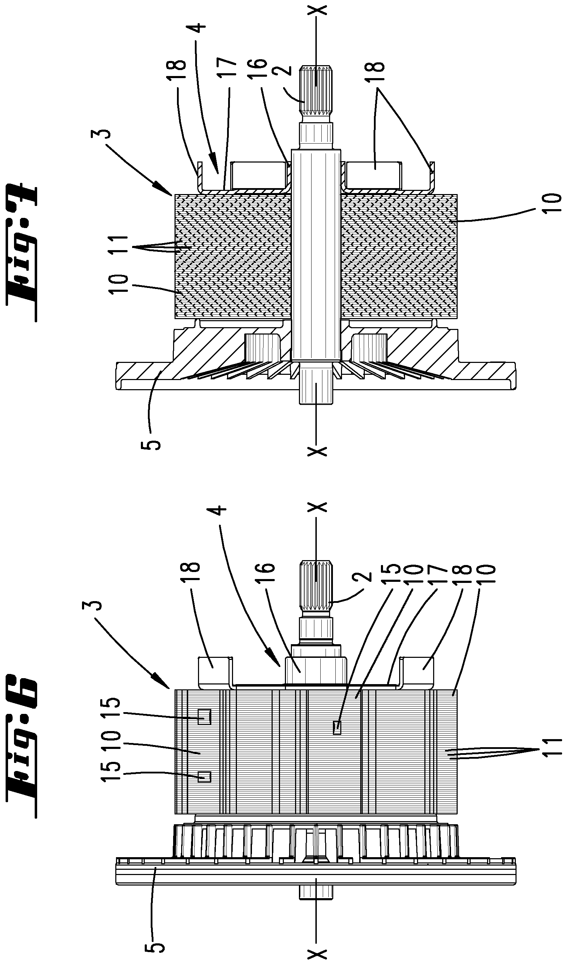

- Fig. 6: die Seitenansicht hierzu;
- Fig. 7: den Schnitt gemäß der Linie VII-VII in Fig. 5;
- Fig. 8: ein Rotorblech in Draufsicht;
- Fig. 9: die Herausvergrößerung des Bereichs IX in Fig. 8;
- Fig. 10: das Rotorblech in perspektivischer Darstellung;

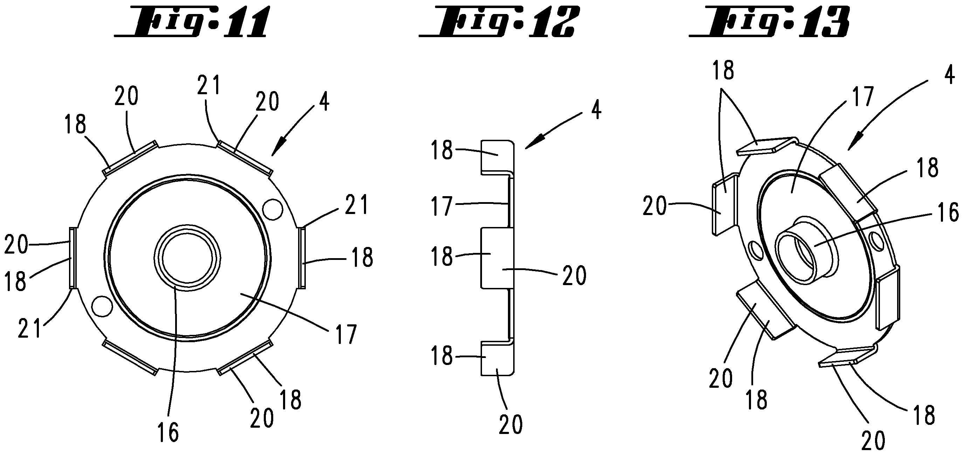

- Fig. 11: die Geberscheibe in einer Einzeldraufsicht;
- Fig. 12: die Seitenansicht der Geberscheibe;
- Fig. 13: eine perspektivische Darstellung der Geberscheibe.

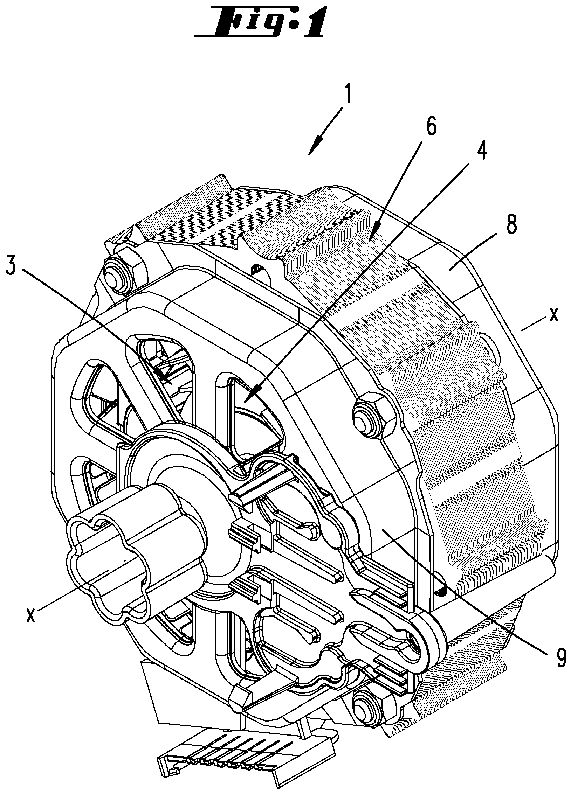

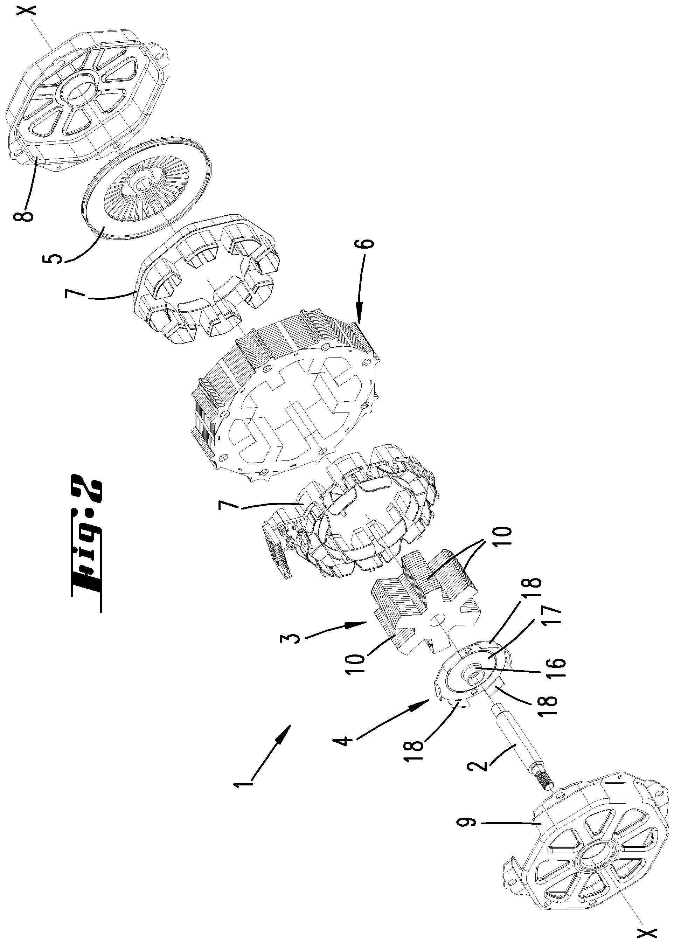

Dargestellt und beschrieben ist zunächst mit Bezug zu den Fig. 1 und 2 ein Reluktanzmotor 1, welcher im Wesentlichen besteht aus einem auf einen Rotorachskörper 2 drehfest aufsteckbaren Rotor 3, einer gleichfalls auf den Rotorachskörper 2 aufsteckbaren und drehfest mit dem Rotor 3 verbindbaren Geberscheibe 4 sowie einem auf der der Geberscheibe 4 gegenüberliegenden Seite des Rotors 3 drehfest mit diesem anordbaren Lüfter 5, einem Stator 6 mit einem zweiteiligen Statorabdeckkörper 7 zur Aufnahme von nicht dargestellten Statorspulen und zwei beidseitig des Stators 6 an diesem befestigbare, die Enden des Rotorachskörpers 2 lagernden Brücken 8, 9.

Der dargestellte Reluktanzmotor 1 ist ein sogenannter 8/6-Reluktanzmotor und weist somit einen Rotor 3 mit sechs Rotorsegmenten 10 und einen Stator 6 mit acht nicht näher dargestellten Statorspulen auf.

Die Rotorsegmente 10 sind winkelgleichmäßig um den Rotorgrundkörper verteilt und ragen radial ab, wobei der Rotor 3 aus einer Vielzahl von axial übereinander angeordneten, gleichen Rotorblechen 11 besteht. Jedes Rotorblech 11 ist bevorzugt ein Stanzteil und ist darüber hinaus mit einer einseitigen Backlack-Beschichtung versehen. Mittels dieser Beschichtung werden die übereinander angeordneten Rotorbleche 11 durch Hitzebeaufschlagung miteinander verklebt, zur Bildung des Rotors 3.

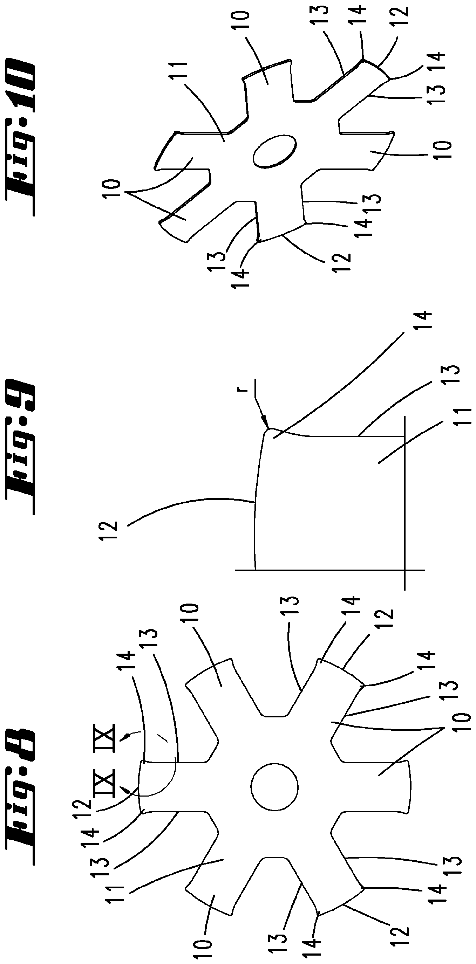

Jedes Rotorsegment 10 ist im Grundriss im Wesentlichen rechteckig geformt mit einer kreisabschnittförmigen Gestaltung der Stirnseite 12 und zwei parallel verlaufenden Flachseiten 13. Jedes Rotorsegment 10 geht in den Übergängen von den Flachseiten 13 in die Stirnseite 12 in eine Verbreiterung über, in welcher Verbreiterung der Übergang in die Stirnseite 12 abgerundet ist. Die Verrundung trägt das Bezugszeichen 14. Zufolge der endseitigen Verbreiterung des Rotorsegments 10 sind die Übergänge in Umfangsrichtung jeweils jenseits einer geradlinigen Verlängerung der Flachseiten 13 ausgebildet (vgl. insbesondere Vergrößerungsdarstellung in Fig. 9).

Der Radius r der Abrundung 14 beträgt in dem dargestellten Ausführungsbeispiel etwa 0,5 mm.

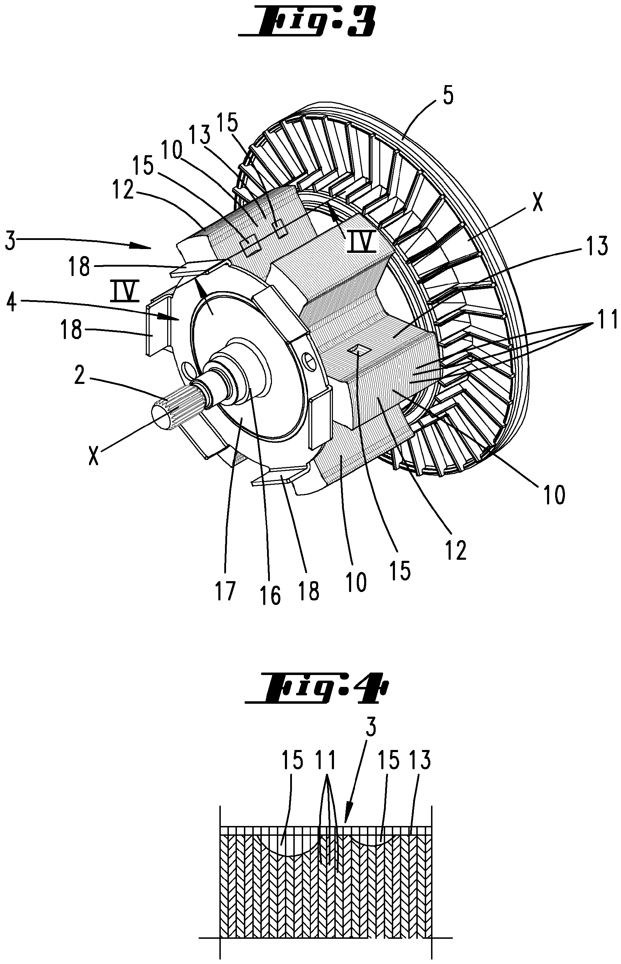

Zum Wuchten des Rotors 3 ist dieser im Bereich der Flachseiten 13 der Rotorsegmente 10 mit Ausfräsungen 15 in unterschiedlichem Ausmaß sowohl bezüglich der in Rotorachsrichtung gemessenen Länge als auch hinsichtlich der Tiefe versehen. Auch sind, wie in Fig. 3 zu erkennen, mehrere Ausfräsungen 15 im Bereich einer Flachseite 13 möglich.

Die drehfest mit dem Rotor 3 auf dem Rotorachskörper 2 befestigte Geberscheibe 4 übernimmt die Funktion einer Halteplatte für den aus einzelnen Rotorblechen 11 bestehenden Rotor 3 und dient somit zur Erhöhung der axialen Festigkeit des Rotors 3. Hierzu steht die Nabe 16 der Geberscheibe 4 gegenüber dem Scheibengrundkörper 17 vor, so dass beim Aufziehen auf den Rotorachskörper 2 eine Vorspannung im elastischen Bereich auf das Rotorpaket erreicht wird.

Auf der der Geberscheibe 4 abgewandten Seite des Rotors 3 ist der drehfest mit diesem angeordnete Lüfter 5 vorgesehen, welcher zusammen mit der Geberscheibe 4 das Rotorblechpaket fasst. Der Lüfter 5 ist hierzu auf einen gekerbten Abschnitt des Rotorachskörpers 2 aufgebracht.

Die Geberscheibe 4 ist durch Stanzen und anschließendem Hochkanten von Geberausformungen 18 gebildet, woraus resultiert, dass die Geberausformungen 18 im Grundriss linear verlaufend ausgebildet sind und in etwa sekantenartig dem Rand des Scheibengrundkörpers 17 zugeordnet sind.

Jede Geberausformung 18 erstreckt sich in einem Umfangswinkel von 30°. Demzufolge ist die zwischen zwei Geberausformungen 18 verbleibende Spaltbreite gleich einer Geberausformungsbreite, so dass eine symmetrische Geberscheibe 4 ausgeformt ist.

Zufolge dieser Ausgestaltung der Geberscheibe 4 werden bei einer Umdrehung des Rotors 3, 24 Impulse - bei Anordnung von zwei durch die Geberausformungen 18 zu durchtretenden Gabellichtschranken 19 - erzeugt. Es ergeben sich vier eindeutige Positionsinformationen zur Ansteuerung der vier Phasen des mit acht Statorwicklungen versehenen Stators 6.

Durch die geradlinig verlaufende Anordnung der Geberausformungen 18 dienen diese zugleich als Verwirbelungsabschnitte 20. Durch diese ist eine Lüfterwirkung erreicht, mittels welcher eine automatische Reinigung der Gabellichtschranken 19 erzielt wird.

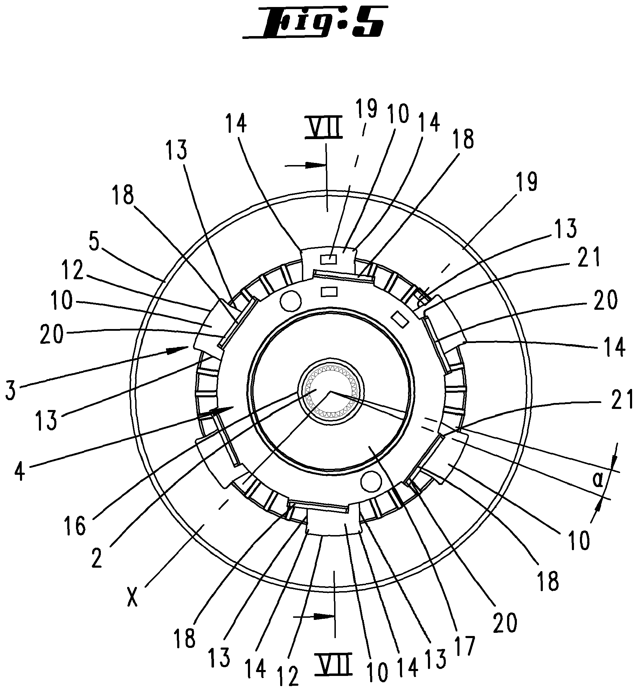

Die Zuordnung der Geberscheibe 4 zum Rotor 3 ist so gewählt, dass bei gleicher Anzahl von Geberausformungen 18 und Rotorsegmenten 10 jede Geberausformung 18 so ausgerichtet ist, dass eine Axialflanke 21 einer Geberausformung 18 bezüglich einer Flachseite 13 des zugeordneten Rotorsegments 10 einen Umfangsversatz von 7,5° aufweist (siehe Winkel Alpha in Fig. 5). Durch diesen Winkelversatz ist ein problemloser Betrieb des vierphasigen Reluktanzmotors 1 sowohl im Rechts- als auch im Linkslaufbetrieb ermöglicht.

## Patentansprüche

1. Reluktanzmotor (1) mit einem Rotor (3) und einem Stator (6), wobei der Rotor (3) Rotorsegmente (10) aufweist, wobei weiter dem Rotor (3) eine Geberscheibe (4) mit Geberausformungen (18) zugeordnet ist, wobei auf der der Geberscheibe (4) gegenüberliegenden Seite des Rotors (3) drehfest mit diesem ein Lüfter (5) angeordnet ist, **dadurch gekennzeichnet dass** eine Geberausformung (18) einen im Grundriss linear verlaufend ausgebildeten Verwirbelungsabschnitt (20) ausformt, wobei eine Geberausformung (18) sekantenartig dem Rand des Scheibengrundkörpers (17) zugeordnet ist.

2. Reluktanzmotor nach Anspruch 1, **dadurch gekennzeichnet, dass** jedem Rotorsegment (10) eine Geberausformung (18) zugeordnet ist, wobei jedoch jedenfalls eine Axialflanke (21) einer Geberausformung (18) bezüglich einer Flachseite (13) des zugeordneten Rotorsegmentes (10) einen Umfangsversatz von 7,5° aufweist.

3. Reluktanzmotor nach einem der Ansprüche 1 oder 2, **dadurch gekennzeichnet, dass** eine Geberausformung (18) sich über einen Umfangswinkel von 30° erstreckt.

4. Reluktanzmotor nach einem der Ansprüche 1 bis 3, **dadurch gekennzeichnet, dass** eine zwischen zwei Geberausformungen (18) verbleibende Spaltbreite gleich einer Geberausformungsbreite ist.

5. Reluktanzmotor nach einem der Ansprüche 1 bis 4, **dadurch gekennzeichnet, dass** die Geberscheibe (4) mit zwei von den Geberausformungen zu durchfahrenden Gabellichtschranken (19) zusammenwirkt.

6. Reluktanzmotor nach einem der Ansprüche 1 bis 5, **dadurch gekennzeichnet, dass** die drehfest mit dem Rotor (3) auf einem Rotorachskörper (2) befestigte Geberscheibe (4) die Funktion einer Halteplatte für den aus einzelnen Rotorblechen (11) bestehenden Rotor übernimmt, wobei die Nabe (16) der Geberscheibe (4) gegenüber dem Scheibengrundkörper (17) vorsteht, so dass beim Aufziehen auf den Rotorachskörper (2) eine Vorspannung im elastischen Bereich auf das Rotorpaket erreicht ist.

## Claims

1. Reluctance motor (1) comprising a rotor (3) and a stator (6), the rotor (3) comprising rotor segments (10), furthermore a sensor disc (4) that comprises sensor projections (18) being associated with the rotor (3), a fan (5) being mounted on the side of the rotor (3) that is opposite the sensor disc (4) for rotation with said rotor,
**characterised in that**
one sensor projection (18) forms a turbulence portion (20) that extends linearly in plan view, one sensor projection (18) being associated, in the manner of a secant, with the edge of the main disc body (17).

2. Reluctance motor according to claim 1, **characterised in that**
one sensor projection (18) is associated with each rotor segment (10), in each case, however, an axial side (21) of a sensor projection (18) having a peripheral offset of 7.5° with respect to a flat side (13) of the associated rotor segment (10).

3. Reluctance motor according to either claim 1 or claim 2, **characterised in that** one sensor projection (18) extends over an inscribed angle of 30°.

4. Reluctance motor according to any of claims 1 to 3, **characterised in that** the width of a gap remaining between two sensor projections (18) is equal to the width of one sensor projection.

5. Reluctance motor according to any of claims 1 to 4, **characterised in that** the sensor disc (4) interacts with two forked photoelectric sensors (19) through which the sensor projections are to pass.

6. Reluctance motor according to any of claims 1 to 5, **characterised in that** the sensor disc (4) fastened on a rotor shaft body (2) for rotation with the rotor (3) assumes the function of a retaining plate for the rotor consisting of individual rotor blades (11),
the hub (16) of the sensor disc (4) protruding in relation to the main disc body (17) such that, when the disc is mounted on the rotor shaft body (2), a pretension in the resilient range is achieved on the rotor stack.

## Revendications

1. Moteur à réluctance (1) ayant un rotor (3) et un stator (6), dans lequel le rotor (3) comprend des segments de rotor (10), dans lequel en outre est associé au rotor (3) un disque de capteur (4) ayant des façonnements de capteur (18), dans lequel sur le côté du rotor (3) opposé au disque de capteur (4) est agencé un ventilateur (5) lié en rotation avec le rotor (4), **caractérisé en ce qu'**un façonnement de capteur forme une partie de tourbillonnement (20) ayant un contour de base s'étendant linéairement, dans lequel un façonnement de capteur (18) est associé de manière sécante au bord du corps de base du disque (17).

2. Moteur à réluctance selon la revendication 1, **caractérisé en ce qu'**un façonnement de capteur (18) est associé à chaque segment de rotor (10), dans lequel toutefois un flanc axial (21) d'un façonnement de capteur (18) présente en tout cas un décalage circonférentiel de 7,5° par rapport à un côté plat (13) du segment de rotor associé (10).

3. Moteur à réluctance selon l'une des revendications 1 ou 2, **caractérisé en ce qu'**un façonnement de capteur (18) s'étend sur un angle circonférentiel de 30°.

4. Moteur à réluctance selon l'une des revendications 1 à 3, **caractérisé en ce qu'**une largeur d'espace subsistant entre deux façonnements de capteur (18) est égale à une largeur de façonnement de capteur.

5. Moteur à réluctance selon l'une des revendications 1 à 4, **caractérisé en ce que** le disque de capteur (4) coopère avec deux barrières lumineuses à fourche (19) destinées à être traversées par les façonnements de capteur.

6. Moteur à réluctance selon l'une des revendications 1 à 5, **caractérisé en ce que** le disque de capteur (4) monté lié en rotation avec le rotor (3) sur un arbre de rotor (2), remplit la fonction de plaque de maintien pour le rotor constitué de tôles de rotor individuelles (11), dans lequel le moyeu (16) du disque de capteur (4) est en saillie par rapport au corps de base du disque (17) de manière à procurer une précontrainte élastique sur le paquet rotorique lors du montage sur l'arbre de rotor (2).
